# EUROPÄISCHE PATENTSCHRIFT

(11) **EP 1 342 635 B1**
(45) Veröffentlichungstag und Bekanntmachung des Hinweises auf die Patenterteilung: **01.06.2005**
(21) Anmeldenummer: 02450249.4
(22) Anmeldetag: 31.10.2002
(51) Int. Cl.: B61B 12/04, F16F 7/10

(54) **Fahrbetriebsmittel, wie Sessel oder Kabine, für eine Seilbahn, mit Schwenkbewegungsdämpfer**
Movable operating unit for a cableway installation, comprising a damper against lateral oscillations
Elément mobile pour une installation de téléphérique, comprenant un amortisseur contre les oscillations latérales

(30) Priorität: 07.03.2002 AT 3612002
(43) Veröffentlichungstag der Anmeldung: 10.09.2003
(73) Patentinhaber: Innova Patent GmbH, 6960 Wolfurt (AT)
(72) Erfinder: Oplatka, Gabor, Prof. Dipl.-Ing. Dr., 8053 Zürich (CH)
(74) Vertreter: Atzwanger, Richard, Dipl.-Ing.

(56) Entgegenhaltungen:
- EP-A- 0 618 380
- AT-B- 395 965
- US-A- 6 035 787

## Beschreibung

Die gegenständliche Erfindung betrifft Fahrbetriebsmittel für eine Seilbahnanlage mit einem Sessel bzw. mit einer Kabine, welcher bzw. welche am unteren Ende einer Tragstange befestigt ist, wobei am oberen Ende der Tragstange eine Klemmeinrichtung zur Anklemmung des Sessels bzw. der Kabine an ein Trag- bzw. Förderseil und gegebenenfalls ein Laufwerk angeordnet sind und wobei weiters der Sessel bzw. die Kabine mit einem Pendel ausgebildet ist.

Beim Betrieb von Seilbahnanlagen besteht das Erfordernis, Schwenkbewegungen der Fahrbetriebsmittel weitgehend auszuschließen. Schwenkbewegungen der Fahrbetriebsmittel in Fahrtrichtung werden dadurch begrenzt, dass die zwischen den Tragstangen und den Fahrbetriebsmitteln vorgesehenen Gelenke mit Dämpfungseinrichtungen ausgebildet sind, durch welche Verschwenkungen der Fahrbetriebsmittel in Fahrtrichtung auf zulässige Ausmaße begrenzt werden. Demgegenüber können Schwenkbewegungen der Fahrbetriebsmittel quer zur Fahrtrichtung durch Dämpfungseinrichtungen deshalb nicht begrenzt werden, da durch sie das Trag- und Förderseil in sich verdreht wird und diese Verdrehung nicht verhindert werden kann. Es ist hierbei zu berücksichtigen, dass durch auf die Fahrbetriebsmittel einwirkende Windkräfte gleichzeitig eine Mehrzahl der Fahrbetriebsmittel in gleicher Richtung verschwenkt werden, wodurch auf das Trag- und Förderseil große Drehmomente einwirken.

Dieser Sachverhalt hat zur Folge, dass es bisher bei Grenzwerte überschreitenden, auf die Fahrbetriebsmittel seitlich einwirkenden Windkräften erforderlich ist, die Fahrgeschwindigkeit der Seilbahnanlage herabzusetzen oder den Betrieb derselben einzustellen.

Es ist bekannt, Schwenkbewegungen von Fahrbetriebsmitteln dadurch zu beschränken, dass die Fahrbetriebsmittel mit Führungen ausgebildet sind, in welchen Rollkörper bewegbar sind. Sobald dabei die Fahrbetriebsmittel in einer Richtung ausschwenken, bewegen sich die Rollkörper in den Führungen in die andere Richtung, wodurch die Schwenkbewegungen der Fahrbetriebsmittel maßgeblich herabgesetzt werden. Diese bekannte Einrichtung ist jedoch in ihrer konstruktiven Gestaltung sehr aufwendig. Zudem stellen die Führungen solche Bestandteile dar, welche die Schwungmasse des Fahrbetriebsmittels vergrößern, wodurch die durch die Rollkörper gebildete Dämpfungsmasse entsprechend vergrößert werden muss.

Aus der EP 618380 A1 ist eine Seilbahnanlage bekannt, bei welcher die Fahrbetriebsmittel mit jeweils einem Pendel ausgebildet sind, durch welches Schwenkbewegungen der Fahrbetriebsmittel quer zur Fahrtrichtung verhindert bzw. herabgesetzt werden sollen. Um mittels eines Pendels eine optimale Dämpfung der Schwenkbewegungen zu erzielen, müssen die Fahrbetriebsmittel einerseits und die diesen zugeordneten Pendel andererseits gleiche Schwingfrequenzen aufweisen. Da jedoch bei der bekannten Seilbahnanlage die Pendel wesentlich kürzer als die Schwenkarme der Fahrbetriebsmittel ausgebildet sind, schwingen die Fahrbetriebsmittel einerseits und die Pendel andererseits mit maßgeblich unterschiedlichen Frequenzen, wodurch Schwingungen der Fahrbetriebsmittel quer zur Fahrtrichtung nur in einem unzureichenden Ausmaß gedämpft werden.

Der gegenständlichen Erfindung liegt somit die Aufgabe zugrunde, ein Fahrbetriebsmittel für eine Seilbahnanlage zu schaffen, durch welche eine weitgehende Dämpfung der Schwingungen der Fahrbetriebsmittel quer zur Fahrtrichtung bewirkt wird.

Dies wird erfindungsgemäß dadurch erzielt, dass das Pendel um eine in der in Fahrtrichtung ausgerichteten vertikalen Symmetrieebene des Sessels bzw. der Kabine liegenden, mit der Vertikalen einen spitzen Winkel einschließenden Achse gelagert ist und dass der Abstand des Schwerpunktes des Sessels bzw. der Kabine vom Trag- bzw. Förderseil einerseits und der Abstand der virtuellen Schwenkachse des Pendels, welche sich im Schnittpunkt der Schwenkachse des Pendels mit der Vertikalen durch den Pendelkörper in seiner mittleren Lage befindet, vom Pendelkörper andererseits gleich groß sind.

Bei einer derartigen Anordnung und Ausbildung des Pendels erfolgt bei einer Schwenkbewegung des Fahrbetriebsmittels eine gegenläufige Schwenkbewegung des Pendels, wodurch die Schwenkbewegung des Fahrbetriebsmittels weitgehend gedämpft wird.

Vorzugsweise ist an der Tragstange bzw. an einem Traggestell für das Fahrbetriebsmittel ein Träger für das Pendel befestigt, an dessen freiem Ende sich das Lager des Pendels befindet. Bei einer Kabine kann sich das Lager für das Pendel am Dach der Kabine befinden.

Nach einer bevorzugten Ausführungsform ist das Pendel mit einer Dämpfungseinrichtung ausgebildet, wobei insbesondere das Lager des Pendels mit einer Dämpfungseinrichtung ausgebildet ist. Weiters kann dem Pendel eine Dämpfungseinrichtung in Form einer Wirbelstrombremse zugeordnet sein.

Der Gegenstand der Erfindung ist nachstehend anhand eines in der Zeichnung dargestellten Ausführungsbeispieles näher erläutert. Es zeigen:
- Fig. 1: einen Sessel einer Seilbahnanlage, welcher mit einem erfindungsgemäßen Pendel ausgebildet ist, in Seitenansicht;
- Fig.2: den Sessel gemäß Fig. 1, in Vorderansicht;
- Fig.3: den Sessel gemäß Fig. 1, in Draufsicht;
- Fig.4: einen Sessel einer Seilbahnanlage mit einem Pendel, in schematischer Seitenansicht;
- Fig.5 bis 7: den Sessel einer Seilbahnanlage, dessen Pendel mit unterschiedlichen Dämpfungseinrichtungen ausgebildet ist, jeweils in Draufsicht.

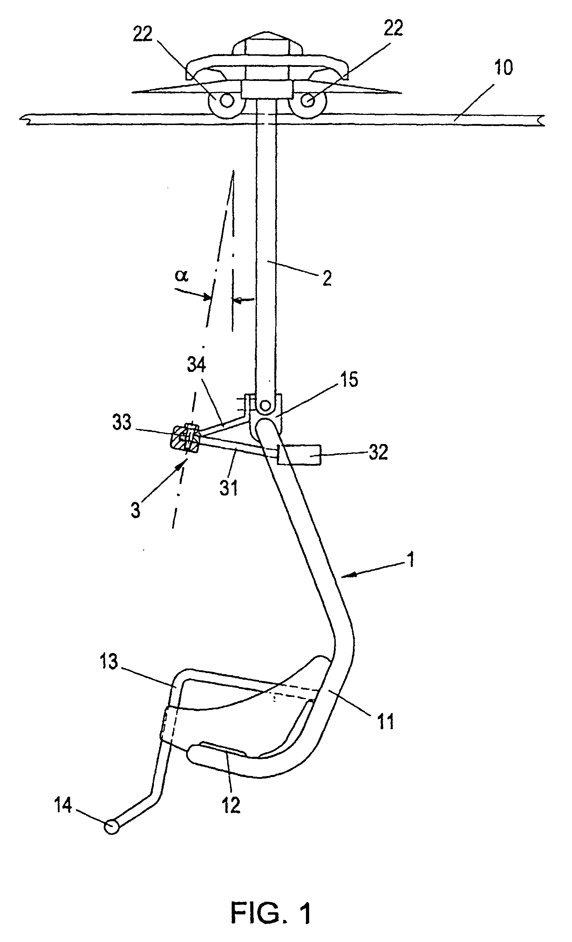

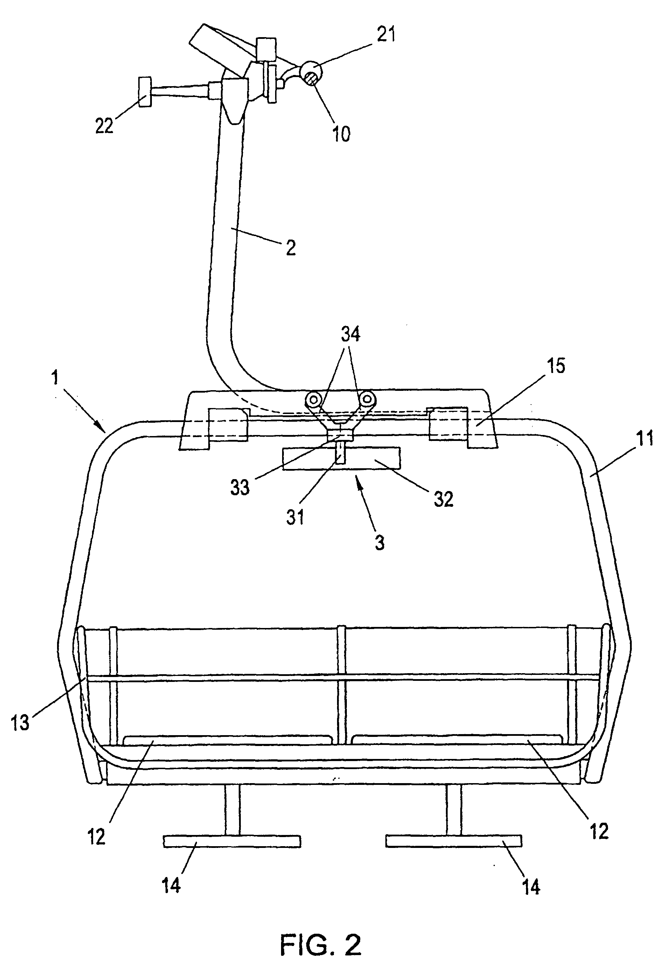

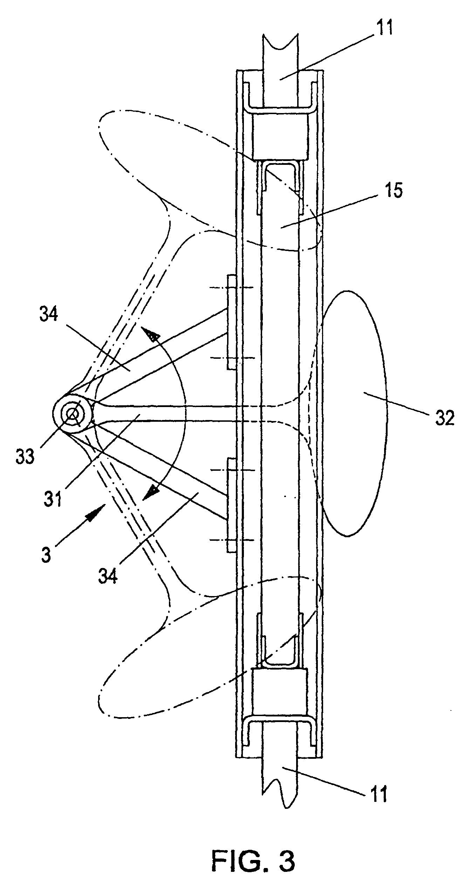

Der in den Fig.1 bis 3 dargestellte Sessel 1 einer Seilbahnanlage ist an das untere Ende einer Tragstange 2 angelenkt, an deren oberen Ende eine Klemmeinrichtung 21 und ein Laufwerk 22 vorgesehen sind. Mittels der Klemmeinrichtung 21 ist die Tragstange 2 an ein Trag- und Förderseil 10 anklemmbar. Der Sessel 1 weist ein Traggestell 11 auf, auf welchem Sitzflächen 12 für mehrere Personen befestigt sind. Zudem ist er mit einem verschwenkbaren Schließbügel 13 ausgebildet, welcher mit Fußrasten 14 versehen ist. Weiters kann der Sessel 1 mit einer verschwenkbaren Schutzhaube ausgebildet sein. Das Traggestell 11 ist mittels eines mit einer Dämpfungseinrichtung ausgebildeten Gelenkes 15 an der Tragstange 2 in Förderrichtung geringfügig verschwenkbar befestigt. Diese Ausbildung des Sessels 1 ist aus dem Stand der Technik bekannt.

Weiters ist dieser Sessel 1 zudem mit einem Pendel 3 ausgebildet, welches durch einen an einer Pendelstange 31 angeordneten Pendelkörper 32 gebildet ist und welches in einem Lager 33, welches an einer an der Tragstange 2 befestigten Konsole 34 vorgesehen ist, gelagert ist. Dabei liegt die Lagerachse des Pendels 3 angenähert in der in Förderrichtung ausgerichteten Symmetrieebene des Sessels 1, wobei sie mit der den Pendelkörper 32 durchsetzenden Vertikalen einen spitzen Winkel α einschließt.
Durch das Pendel 3 erfolgt bei einer Schwenkbewegung des Sessels 1 quer zum Seil 10 eine gegenläufige Schwenkbewegung des Pendelkörpers 32, wodurch die Schwenkbewegung des Sessels 1 weitestgehend herabgesetzt wird.

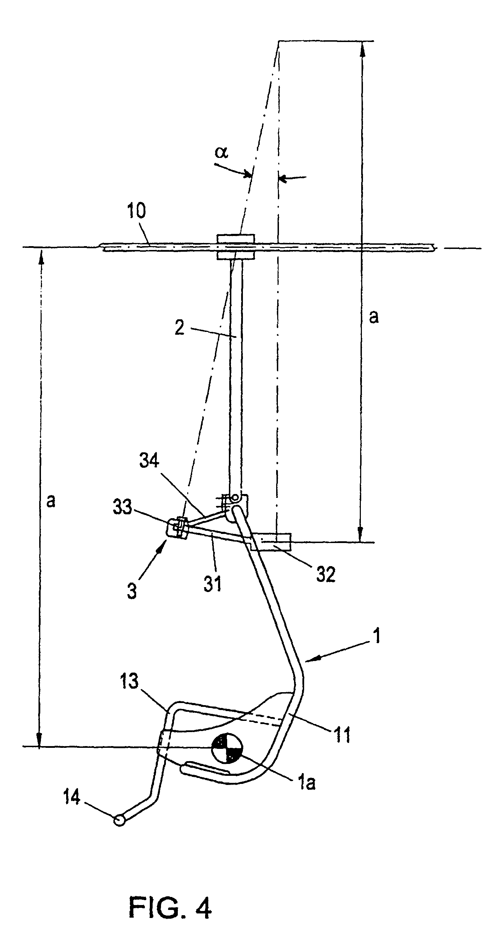

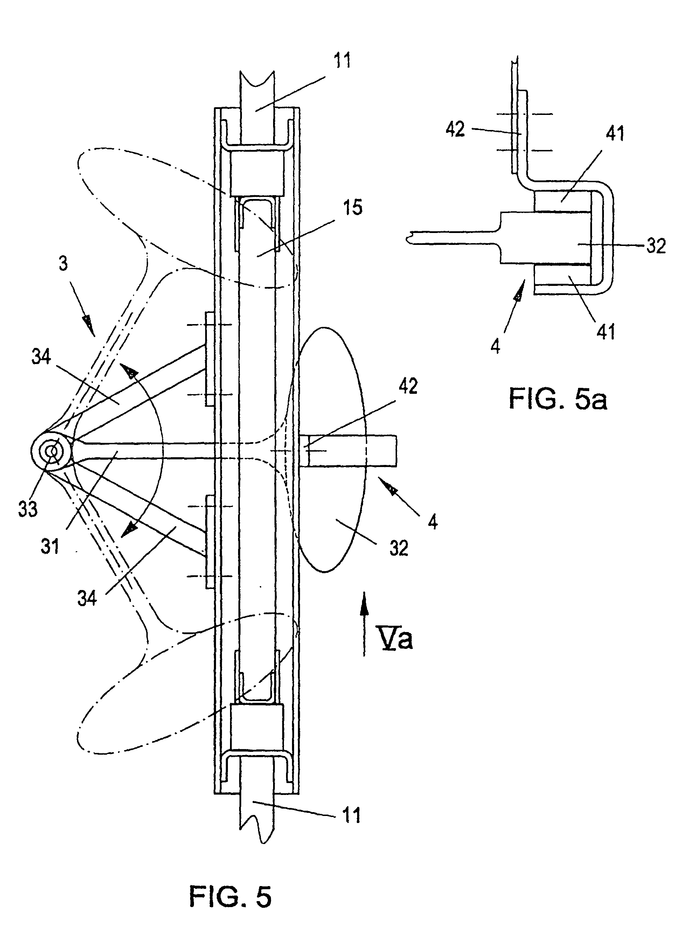

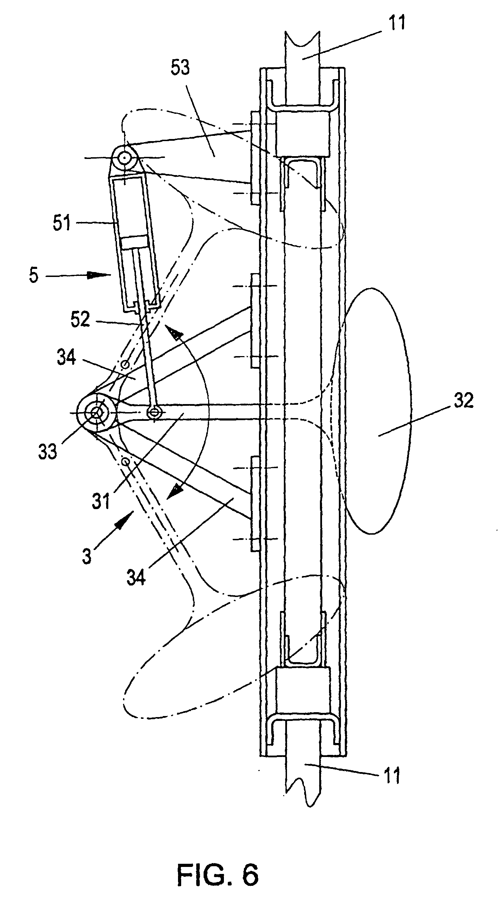

Wie dies aus Fig.4, anhand welcher nachstehend die physikalischen Gegebenheiten erläutert sind, ersichtlich ist, befindet sich der Schwerpunkt 1a des Sessels 1 vom Trag- und Förderseil 10 im Abstand a. Weiters befindet sich die virtuelle Schwenkachse des Pendels 3, welche sich im Schnittpunkt der Schwenkachse des Pendels 3 mit der Vertikalen durch den Pendelkörper 32 in seiner mittleren Lage befindet, vom Pendelkörper 32 gleichfalls im Abstand a, wobei dieser Abstand für die Wirkung des Pendels 3 maßgeblich ist. Somit bilden einerseits der Sessel 1 und andererseits das Pendel 3 zwei Pendel, welche um parallele Achsen schwingen, wobei die für diese beiden Pendel wirksamen Pendellängen gleich groß sind. Hierbei führt das Pendel 3 eine der Verschwenkung des Sessels 1 entgegengesetzte Verschwenkung aus, wodurch die Schwenkbewegung des Sessels 1 um das Trag- und Förderseil 10 weitestgehend gedämpft wird.
Um die Wirkung des Pendels 3 einstellen zu können, besteht das Erfordernis, dessen Schwenkbewegungen zu dämpfen. Gemäß der in den Fig.5 und 5a dargestellten ersten Ausführungsform ist dem Pendelkörper 32 eine Wirbelstrombremse 4 zugeordnet, welche durch Permanentmagneten 41 gebildet sind, welche auf einer an der Tragstange 2 oder am Traggestell 11 befestigten Konsole 42 angeordnet sind.
Gemäß der in Fig.6 dargestellten Ausführungsform ist dem Pendel 3 eine pneumatische Dämpfungseinrichtung 5 zugeordnet, welche durch einen pneumatischen Zylinder 51, deren Kolbenstange 52 an die Pendelstange 31 angelenkt ist, gebildet ist, wobei der Zylinder 51 mittels einer Konsole 53 am Traggestell 11 befestigt ist.

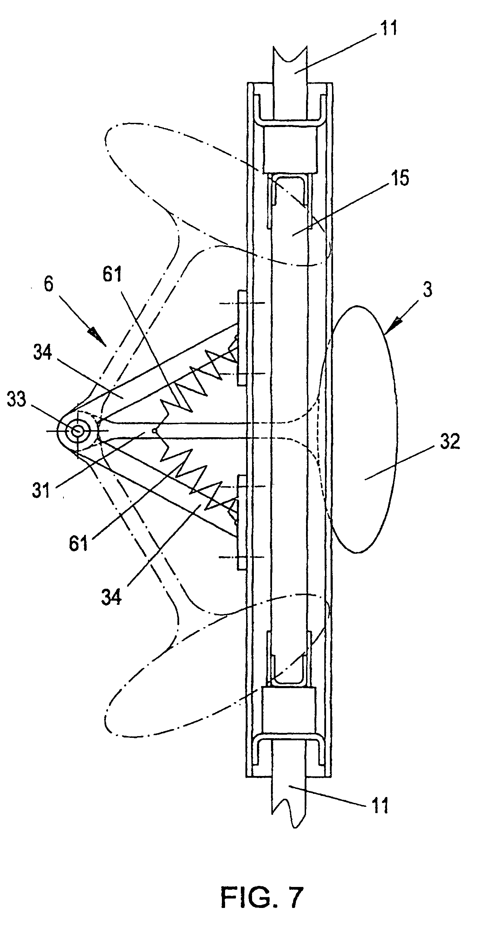

Gemäß der in Fig.7 dargestellten Ausführungsform, steht das Pendel unter Wirkung von Zugfedern 61, welche einerseits am Pendel 3 und andererseits an der Tragstange 2 angelenkt sind.

## Patentansprüche

1. Fahrbetriebsmittel für eine Seilbahnanlage mit einem Sessel (1) bzw. mit einer Kabine, welcher bzw. welche am unteren Ende einer Tragstange (2) befestigt ist, wobei am oberen Ende der Tragstange (2) eine Klemmeinrichtung zur Anklemmung des Sessels (1) bzw. der Kabine an ein Trag- bzw. Förderseil (10) und gegebenenfalls ein Laufwerk (22) angeordnet sind und wobei weiters der Sessel (1) bzw. die Kabine mit einem Pendel (3) ausgebildet ist, **dadurch gekennzeichnet, dass** das Pendel (3) um eine in der in Fahrtrichtung ausgerichteten vertikalen Symmetrieebene des Sessels (1) bzw. der Kabine liegenden, mit der Vertikalen einen spitzen Winkel (α) einschließende Achse gelagert ist und dass der Abstand (a) des Schwerpunktes (1a) des Sessels (1) bzw. der Kabine vom Trag- bzw. Förderseil (10) einerseits und der Abstand (a) der virtuellen Schwenkachse des Pendels (3), welche sich im Schnittpunkt der Schwenkachse des Pendels (3) mit der Vertikalen durch den Pendelkörper (32) in seiner mittleren Lage befindet, vom Pendelkörper (32) andererseits gleich groß sind.

2. Fahrbetriebsmittel nach Patentanspruch 1, **dadurch gekennzeichnet, dass** an der Tragstange (2) bzw. an einem Traggestell (11) für das Fahrbetriebsmittel (1) ein Träger (34) für das Pendel (3) befestigt ist, an dessen freiem Ende sich das Pendellager (33) befindet.

3. Fahrbetriebsmittel nach Patentanspruch 1, **dadurch gekennzeichnet, dass** sich das Lager für das Pendel am Dach der Kabine befindet.

4. Fahrbetriebsmittel nach einem der Patentansprüche 1 bis 3, **dadurch gekennzeichnet, dass** das Pendel (3) mit einer Dämpfungseinrichtung, wie einer Federdämpfung (6) oder einer pneumatischen Dämpfungseinrichtung (5), ausgebildet ist.

5. Fahrbetriebsmittel nach einem der Patentansprüche 1 bis 4, **dadurch gekennzeichnet, dass** das Pendellager (33) des Pendels (3) mit einer Dämpfungseinrichtung ausgebildet ist.

6. Fahrbetriebsmittel nach einem der Patentansprüche 1 bis 4, **dadurch gekennzeichnet, dass** dem Pendelkörper (32) eine Dämpfungseinrichtung, z.B. eine Wirbelstrombremse (4), zugeordnet ist.

## Claims

1. A movable operating unit for an aerial cableway installation, having a chair (1) or a car which is attached to the lower end of a suspension rod (2), there being arranged at the upper end of the suspension rod (2) a clamping apparatus, for clamping the chair (1) or the car to a carrying and/or hauling cable (10), and optionally a running gear (22) and the chair (1) or car additionally comprising a pendulum (3), **characterised in that** the pendulum (3) is mounted about an axis lying in the vertical plane of symmetry, oriented in the direction of travel, of the chair (1) or car and forming an acute angle (α) with the vertical and **in that** the distance (a) between the centre of gravity (1a) of the chair (1) or car and the carrying and/or hauling cable (10) on the one hand and the distance (a) between the virtual swivel axis of the pendulum (3), which is located at the point of intersection of the swivel axis of the pendulum (3) with the vertical through the pendulum body (32) in its central position, and the pendulum body (32) on the other hand are of equal size.

2. A movable operating unit according to claim 1, **characterised in that** a support (34) for the pendulum (3) is attached to the suspension rod (2) or to a suspension frame (11) for the movable operating unit (1), at the free end of which support (34) there is located the pendulum bearing (33).

3. A movable operating unit according to claim 1, **characterised in that** the bearing for the pendulum is located on the roof of the car.

4. A movable operating unit according to any one of claims 1 to 3, **characterised in that** the pendulum (3) comprises a damping apparatus, such as a spring damping system (6) or a pneumatic damping apparatus (5).

5. A movable operating unit according to any one of claims 1 to 4, **characterised in that** the pendulum bearing (33) of the pendulum (3) comprises a damping apparatus.

6. A movable operating unit according to any one of claims 1 to 4, **characterised in that** a damping apparatus, e.g. an eddy current brake (4), is associated with the pendulum body (32)

## Revendications

1. Véhicule pour un téléphérique, comprenant un siège (1) ou une cabine fixé à l'extrémité inférieure d'une barre porteuse (2), étant précisé qu'il est prévu à l'extrémité supérieure de ladite barre porteuse (2) un dispositif de serrage pour fixer par serrage le siège (1) ou la cabine à un câble porteur et tracteur (10), et éventuellement un mécanisme de roulement (22), et que le siège (1) ou la cabine est également pourvu d'un balancier (3),
**caractérisé en ce que** le balancier (3) est monté sur un axe qui est situé dans le plan de symétrie vertical, dirigé dans le sens de marche, du siège (1) ou de la cabine et qui forme avec la verticale un angle aigu (α), et **en ce que** la distance (a) entre le centre de gravité (1a) du siège (1) ou de la cabine et le câble porteur et tracteur (10), d'une part, et la distance (a) entre l'axe de pivotement virtuel du balancier (3), situé à l'intersection de l'axe de pivotement du balancier (3) et de la verticale traversant le corps pendulaire (32) dans sa position centrale, et le corps pendulaire (32), d'autre part, sont égales.

2. Véhicule selon la revendication 1, **caractérisé en ce qu'**il est prévu, fixé à la barre porteuse (2) ou à un châssis porteur (11) pour le véhicule (1), un support (34) pour le balancier (3), à l'extrémité libre duquel se trouve le palier de balancier (33).

3. Véhicule selon la revendication 1, **caractérisé en ce que** le palier pour le balancier se trouve sur le toit de la cabine.

4. Véhicule selon l'une des revendications 1 à 3, **caractérisé en ce que** le balancier (3) est pourvu d'un dispositif d'amortissement tel qu'un amortissement à ressort (6) ou un dispositif d'amortissement pneumatique (5).

5. Véhicule selon l'une des revendications 1 à 4, **caractérisé en ce que** le palier (33) du balancier (3) est pourvu d'un dispositif d'amortissement.

6. Véhicule selon l'une des revendications 1 à 4, **caractérisé en ce qu'**un dispositif d'amortissement, par exemple un frein à courants de Foucault (4), est associé au corps pendulaire (32).
